# EUROPÄISCHE PATENTSCHRIFT

(11) **EP 1 538 186 B1**
(45) Veröffentlichungstag und Bekanntmachung des Hinweises auf die Patenterteilung: **05.09.2007**
(21) Anmeldenummer: 04027403.7
(22) Anmeldetag: 18.11.2004
(51) Int. Cl.: C09D 5/00

(54) **Feste, strahlenhärtende Bindemittel mit Reaktivverdünnern**
Solid binding agents hardened by means of radiation containing reactive diluents
Liants radiodurcissables solides comprenant des diluants réactifs

(30) Priorität: 01.12.2003 DE 10356041
(43) Veröffentlichungstag der Anmeldung: 08.06.2005
(73) Patentinhaber: Bayer MaterialScience AG, 51368 Leverkusen (DE)
(72) Erfinder: Fäcke, Thomas, Dr., Bridgeville PA 15017 (US); Weikard, Jan, Dr., 51519 Odenthal (DE); Thometzek, Peter, Dr., 70329 Stuttgart (DE)

(56) Entgegenhaltungen:
- EP-A- 1 245 647
- US-A1- 2003 134 125

## Beschreibung

Die vorliegende Erfindung betrifft neue Pulverlackbindemittel mit einer Glastemperatur von ≥ 35°C enthaltend mindestens ein organisches Polymer und ein oder mehrere strahlenhärtende Reaktivverdünner, ein Verfahren zur Herstellung dieser Pulverlackbindemittel sowie ihre Verwendung als Bestandteil von Pulverlacken.

Pulverlackbindemittel werden auf ein Substrat appliziert, mit Wärme aufgeschmolzen und durch strahlenhärtende, elektromagnetische Strahlung gehärtet. Die Härtung mittels elektromagnetischer Strahlung gewinnt in den letzten Jahren zunehmend an Bedeutung. Der Härtungsprozess ist sehr schnell, was die Prozessgeschwindigkeit des Beschichtungsvorgangs verringert und damit eine Kostenersparnis darstellt. Strahlenhärtende Pulverlacke sind schon sehr lange bekannt (US-A 3,974,303) und basieren meist auf Polyestern (z.B. DE-A 42 28 514), Polyurethanen (EP-A 410 242) und Polyacrylaten (DE-A 44 13 436). Mischungen sind ebenfalls bekannt.

Die Verwendung von Oligo- und Polyurethanen als pulverförmige Bindemittel ermöglicht es, besonders hochwertige Beschichtungen zu erhalten. Während die EP-A 410 242 die Herstellung derartiger Bindemittel in organischen Lösungsmittel beschreibt, lehrt die DE-A 19 939 843 die lösungsmittelfreie Herstellung unter Verwendung eines hohen Massenanteils von 10 bis 95 % einer kristallinen Komponente, die aus einem Mono- oder Diisocyanat und einem Mono-Hydroxyalkyl(meth)acrylat aufgebaut ist. Diese Synthese ohne Lösungsmittel wird erst durch den viskositätsemiedrigenden Effekt der geschmolzenen, kristallinen Komponente möglich.

Ein Nachteil der in der EP-A 410 242 und in der DE-A 19 939 843 beschriebenen Oligo- und Polyurethane ist die schlechte Mahlbarkeit. Die Produkte können nur bei Temperaturen unter 0°C ohne Verklumpung vermahlen werden und die gesamte weitere Pulverhandhabung muss bei Temperaturen unterhalb Raumtemperatur erfolgen.

Bei amorphen Materialien werden deren Eigenschaften dadurch bestimmt, ob man das Material oberhalb bzw. unterhalb seiner Glasübergangstemperatur untersucht. Unterhalb seiner Glasübergangstemperatur erhält man in der Regel mahlbare Produkte. Ist die Glasübergangstemperatur zu hoch, werden die Produkte nur bei sehr hohen Temperaturen rührbar. Die Eigenschaften eines Pulverlackes werden durch die bei der Pulverlackierung auftretenden Umgebungstemperaturen maßgeblich bestimmt. Im Sommer und insbesondere in der Nähe der für das Aufschmelzen der Pulverlacke notwendigen Öfen ist mit höheren Temperaturen als üblichen Raumtemperaturen von 20 bis 25°C zu rechnen. Für die Pulverlackierung ist daher in der Praxis eine hinreichend hohe Glasübergangstemperatur von ≥35°C erforderlich.

In der PCT-Anmeldung WO 03/044111 werden UV-Pulverlackbindemittel beschrieben, die amorph und im geschmolzenen Zustand besonders niedrigviskos sind. Nachteilig ist hier für manche Anwendungen das hohe Molekulargewicht des Urethanacrylats. Somit bleiben kaum Freiheitsgrade die Doppelbindungsdichte einzustellen.

In der UV-Flüssiglackchemie ist es üblich, sogenannte Reaktivverdünner zu verwenden, um zum einen die Viskosität des Flüssiglackes zu erniedrigen und gleichzeitig die UV-Reaktivität durch eine Erhöhung der Doppelbindungsdichte zu verbessern, was üblicherweise auch mit verbesserten Läckbeständigkeiten einhergeht.

Die der Erfindung zugrundeliegende Aufgabe bestand nun daher darin, bei Raumtemperatur mahlbare, lagerstabile, strahlenhärtende Pulver bereitzustellen, die unter Herstell- und praxisrelevanten Verarbeitungsbedingungen keine Tendenz zum Verbacken haben, ohne Lösungsmittel hergestellt werden können und gegenüber dem Stand der Technik zur Einstellung der Doppelbindungsdichte in der Flüssiglackchemie übliche Reaktivverdünner enthalten.

Es wurde nun gefunden, dass bei Raumtemperatur gut mahlbare und lagerstabile Pulver erhalten werden, die sich auch lösungsmittelfrei in der Schmelze herstellen lassen, wenn geeignete gegebenenfalls ungesättigte organische Polymere verwendet werden, so dass trotz der zusätzlichen Einarbeitung von einem oder mehreren Reaktivverdünnern hinreichend hohe Glasübergangstemperaturen der Mischungen resultieren.

Dies ist überraschend, da üblicherweise bei Zusatz von Reaktivverdünnern eine deutliche Erniedrigung des Glaspunktes, oder sogar Verklumpung zu erwarten ist.

Gegenstand der Erfindung sind Pulverlackbindemittel mit einer Glastemperatur von mindestens 35°C, enthaltend mindestens ein organisches Polymer ausgewählt aus der Gruppe bestehend aus Polyurethanen, Polyestern, Polyacrylaten, Polyethem, Polyamiden, Polycarbonaten und Mischungen der genannten Polymere sowie mindestens 2 Gewichtsprozent eines oder mehrerer strahlenhärtender Reaktivverdünner.

Gegenstand der Erfindung ist auch ein Verfahren zur Herstellung der erfindungsgemäßen Pulverlackbindemittel, bei dem
a) ein oder mehrere organische Polymere ausgewählt aus der Gruppe bestehend aus Polyurethanen, Polyestern, Polyacrylaten, Polyethern, Polyamiden, Polycarbonaten und Mischungen der genannten Polymere während ihrer Herstellung oder im Anschluss daran
b) mit mindestens 2 Gew.-% eines oder mehrerer strahlenhärtender Reaktivverdünner vermischt werden,
wobei die Zusammensetzung der Komponenten a) und b) sowie deren Mengenverhältnis untereinander so zu wählen ist, dass eine Glastemperatur des erfindungsgemäßen Bindemittels von mindestens 35°C resultiert.

Gegenstand der Erfindung ist weiterhin die Einarbeitung der Pulverlackbindemittel in Pulverlacke und deren Verwendung zur Beschichtung von Substraten aus Holz, Metall, Kunststoff, mineralischen Stoffen und/oder bereits beschichteten Substraten hieraus oder von Substraten hieraus, die aus beliebigen Kombinationen der genannten Materialen bestehen. Insbesondere seien hier Anwendungen in der Industrielackierung von MDF-Platten, vormontierten höherwertigen Gütern (beispielsweise solchen die z.B. bereits temperaturempfindliche Baugruppen enthalten), die Lackierung von Möbeln, Coils, Gegenständen des täglichen Lebens, Automobile, Automobilkarossen und deren Anbauteile genannt. Die erfindungsgemäßen Pulverlackbindemittel mit Reaktivverdünner können dabei auch in Kombination miteinander oder mit anderen in der Pulverlackchemie üblichen Bindemitteln gemeinsam verwendet werden. So z.B. mit Polyestern, Polyacrylaten, Polyurethanen, Polyethern, Polyamiden, Polycarbonaten, die auch gegebenenfalls ungesättigte Gruppen enthalten können.

Wie in den Polymerwissenschaften üblich wird mit einer Glasübergangstemperatur oder Glastemperatur (Tg) die Temperatur beschrieben, bei der sich ein amorphes Material beim Erwärmen von einem glasartigen zu einem flüssigen (bei niedermolekularen Substanzen) bzw. zu einem gummiartigen (bei höhermolekularen Substanzen) Zustand wandelt. Auch semikristalline Materialien besitzen eine Glasübergangstemperatur. Detaillierte Informationen finden sich hierzu in H.-G. Elias, An Introduction to Polymer Science, VCH Verlagsgesellschaft mbH, Weinheim, Deutschland 1997, S. 315-316.

Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999).

Unter Einwirkung aktinischer Strahlung mit ethylenisch ungesättigten Verbindungen unter Polymerisation reagierende Gruppen (strahlenhärtende Gruppen) können beispielsweise Vinyl-, Vinylether-, Propenyl-, Allyl-, Maleinyl-, Fumaryl-, Maleinimid-, Dicyclopentadienyl-, Acrylamid-, Acryl- und Methacryl-Gruppen sein, bevorzugt sind Vinylether-, Acryl- und/oder Methacryl-Gruppen, besonders bevorzugt sind Acrylgruppen.

Mit einem Reaktivverdünner im Sinne dieser Erfindung sind alle organischen Substanzen gemeint, die im Mittel mindestens eine strahlenhärtbare Gruppe, also mindestens eine unter Einwirkung aktinischer Strahlung mit ethylenisch ungesättigten Verbindungen unter Polymerisation reagierenden Gruppe, enthalten.

Die in der Chemie strahlenhärtender Bindemittel dem Fachmann bekannten Reaktivdünner (siehe "Chemistry & Technology of UV & EB Formulations for Coatings, Inks & Paints", Vol. 2, P K T Oldring (Ed.), SITA Technology, London, England, S. 250-290, 1991) besitzen in der Regel neben den strahlenhärtbaren Funktionalitäten keine weiteren funktionellen Gruppen. Allerdings ist es sehr gut möglich, auch solche Verbindungen einzusetzen, die noch Alkohol-, Säure-, Isocyanat-, Epoxy-, Silyl-, Phosphin-, Phosphat-, Isocyanat, Harnstoff-, Isocyanurat-, Uretdion, Biuret- oder andere Gruppen enthalten, insbesondere wenn hierdurch weitere vorteilhafte Effekte wie z.B. Haftung erreicht werden.

Beispiele für Reaktivverdünner sind (Meth)acrylsäure und ihre Ester, Vinyl(meth)acrylat, Allyl(meth)acrylat, Trimethylolpropandiallylether, Glycerin-tri(meth)acrylat, Trimethylolpropandi(meth)acrylat, Trimethylolpropantri(meth)acrylat, Pentaerythrittri(meth)acrylat, Pentaerythrittetra(meth)acrylat, Dipentaerythritpenta(meth)acrylat, und Dipentaerythrithexa(meth)acrylat, Neopentyldi(meth)acrylat, Styrol, Divinylbenzol, Vinyltoluol, Isobornyl(meth)acrylat, Butoxyethyl(meth)acrylat Alkylenglycoldi(meth)acrylate wie Ethylen-, Propylen-glycoldi(meth)acrylate, Polyalkylenglycoldi(meth)acrylate wie Polyethylen-, Polypropylen-glycoldi(meth)acrylate, Di(meth)-acrylate einfache Diole wie z.B. Butandioldi(meth)acrylat, Hexandioldi(meth)acrylat, Cyclohexandimethanol-di(meth)acrylat, Dicyclopentyl(meth)acrylat. Bevorzugt sind Hexandioldiacrylat, Isobomylmethacrylat, Isodecylmethacrylat, Tricyclodekandimethyloldimethacrylat, Tripropylenglycoldiacrylat, und die (meth)acrylierten Produkte von ggf. ethoxylierten oder propoxylierten Diolen oder Polyolen wie z.B. Trimethylolpropan, Pentaerythrit, Bisphenol A oder Cyclohexandimethanol.

Auch Gemische aus den vorgenannten Verbindungen können verwendet werden. Bevorzugt sind Trimethyolpropantrimethacrylat und/oder Trimethyolpropantriacrylat.

Werden Reaktivverdünner bei der Herstellung von Bindemitteln auf Basis von Isocyanaten (z.B. aus Urethanen) eingesetzt, so sind Reaktivverdünner bevorzugt, die keine mit Isocyanaten reaktiven Gruppen tragen oder nur solche, die nur sehr langsam mit Isocyanaten abreagieren (wie z.B. sterisch gehinderte Alkohole).

Der maximale Gehalt eines Reaktivverdünners wird dadurch bestimmt, in welchem Maße dieser die Glasübergangstemperatur des Bindemittels erniedrigt. Die Glasübergangstemperatur der erfindungsgemäßen Pulverlackbindemittel liegt typischerweise ≥ 35°C, bevorzugt ≥ 42°C und besonders bevorzugt ≥ 48°C.

Daher sind die Pulverlackbindemittel bevorzugt, die weniger als 50 Gew.-% und besonders bevorzugt weniger als 30 Gew.-% strahlenhärtende Reaktivverdünner enthalten.

Bevorzugt weisen die erfindungsgemäß einzusetzenden organischen Polymere ein zahlenmittleres Molekulargewicht von 1 000 bis 10 000 g/mol, besonders bevorzugt von 1 200 bis 5 000 g/mol auf.

Die erfindungsgemäß einzusetzenden organischen Polymere der vorstehend genannten Art können ungesättigte unter Einwirkung aktinischer Strahlung mit ethylenisch ungesättigten Verbindungen unter Polymerisation reagierenden Gruppen (strahlenhärtende Gruppen) aufweisen oder auch frei von derartigen strahlenhärtenden Gruppen sein. Bevorzugt weist mindestens eines der erfindungsgemäß einzusetzenden organischen Polymere ein oder mehrere strahlenhärtende Gruppen pro Molekül auf.

Die Herstellung der erfindungsgemäßen Pulverlackbindemittel mit einer T_{g} von mindestens 35°C enthaltend mindestens 2 Gew.-% eines oder mehrerer strahlenhärtender Reaktivverdünner kann dadurch erfolgen, dass zunächst ein oder mehrere erfindungsgemäß einzusetzenden organischen Polymere gegebenenfalls als Mischung bereitgestellt werden und dann der Reaktivverdünner zugesetzt und eingearbeitet wird. Es ist auch möglich, den Reaktivverdünner während oder schon zu Beginn der Herstellung der organischen Polymere oder deren Mischung zuzugeben, was den Vorteil hat, dass die Schmelzviskosität der Mischung erniedrigt werden kann.

Bei den erfindungsgemäß einzusetzenden Polyestern und Polyamiden handelt es sich üblicherweise um derartige, die entweder über eine ungesättigte Säure bzw. Anhydrid aufgebaut worden sind. Typisch Ausgangsstoffe hierfür sind Maleinsäure(anhydrid) und Fumarsäure.

Zum Aufbau der erfindungsgemäß einzusetzenden organischen Polymere auf Polyester-, Polycarbonat- bzw. Polyurethan-Basis können neben gesättigten auch ungesättigte Alkohole verwendet werden, wie Hydroxyalkyl(meth)acrylate mit 2 bis 12 Kohlenstoffatomen in der Alkylkette, vorzugsweise 2 bis 4 Kohlenstoffatomen im Hydroxyalkylrest wie Hydroxyethyl(meth)-acrylat, 2- und 3-Hydroxypropyl(meth)acrylat und 2-, 3- und 4-Hydroxybutyl(meth)acrylat, weiterhin OH funktionelle Vinylether, wie z.B. Hydroxybutylvinylether sowie deren Mischungen. Erfindungsgemäß sind auch OH-funktionelle (Meth)acrylsäureester bzw. -amide n-wertiger Alkohole oder Aminen oder Aminoalkoholen, wobei auch Gemische eingesetzt werden können. Zu diesen Verbindungen bzw. Produktgemischen gehören beispielsweise die Ester des Glycerins, Trimethylolpropans und/oder Pentaerythrits. Ebenfalls können definierte Monoalkohole aus der Umsetzung von epoxyfunktionellen (Meth)acrylsäurester mit (Meth)Acrylsäure verwendet werden. So ergibt die Umsetzung von Glycidylmethacrylat mit Acrylsäure einen gemischten Acrylsäure- Methacrylsäureester des Glycerins, der ebenfalls vorteilhaft verwendet werden kann.

Bevorzugt sind Hydroxyethylacrylat und die isomeren Hydroxypropylacrylate. Bedingt durch die hohen Herstellungstemperaturen von Polyestern und Polyamiden ist diese Vorgehensweise mit acrylfunktionellen Alkoholen nur für den Aufbau von Polyurethanen bevorzugt.

Polyacrylate können nur nach der Polymerisation der Acrylat- und Vinylaromatenmonomere strahlenhärtend modifiziert werden. Dies gelingt mittels funktioneller Gruppen, die inert sind gegenüber den Herstellungsbedingungen des Polyacrylats. Mögliche Gruppen, die am Polyacrylat modifiziert werden können, sind:

| | |
|---|---|
| funktionelle Gruppe am Polyacrylat | Modifizierungsreagenzien |
| Epoxy | Acrylsäure, dimere Acrylsäure |
| Säure | Glycidylverbindungen, z.B. Glycidylmethacrylat |
| Alkohol | Acrylsäure, dimere Acrylsäure |
| Alkohol | Acrylfunktionelles Isocyanat |
| Acrylsäure, dimere Acrylsäure | Alkohol |
| Acrylfunktionelles Isocyanat | Alkohol |
| Anhydride | Alkohol |
| Alkohol | Anhydride |

Polyester mit einer Glasübergangstemperatur > 40°C können ebenfalls verwendet werden. Wie dem Fachmann bekannt ist, werden diese in einer Kondensationsreaktion aus Alkoholen und Säuren hergestellt. Bei der Herstellung von ungesättigten Polyestern werden zudem ungesättigte Disäuren oder Anhydride wie z.B. Fumarsäure und Maleinsäure verwendet. Weitere Information hierzu gibt die europäische Patentanmeldung EP 585 742 A1 S.1, Zeile 30 bis S. 3, Zeile 18.

So kann z.B. ein ungesättigter Polyester mit hoher Glasübergangstemperatur von 57°C wie z.B. Uvecoat® 2100 (Handelsprodukt der UCB Chemicals, Belgien) mit Reaktivverdünnern versetzt werden, ohne eine für die Lagerstabilität kritische minimale Glasübergangstemperatur zu unterschreiten.

Beispiele erfindungsgemäß einzusetzender ungesättigter organischer Polymere auf Polyurethanbasis können gemäss PCT-Anmeldung WO 03/044111 erhalten werden durch die Umsetzung von
A) einem oder mehreren Di- oder Polyisocyanaten oder Mischungen hieraus, gegebenenfalls unter Zusatz von Monoisocyanaten mit
B) einer oder mehreren mit Isocyanaten polyfunktionell reagierenden Verbindungen und
C) einer oder mehreren mit Isocyanaten monofunktionell reagierenden Verbindungen,
wobei das Verhältnis der Stoffmenge A) (mol NCO-Gruppen) zu der Summe der Stoffmengen mit Isocyanaten reagierenden Bausteinen aus B) und C) zwischen 0,8 und 1,2 liegt und die (Meth)-acryloylgruppen entweder in B) oder in C) oder in beiden Komponenten enthalten sind, dadurch gekennzeichnet, dass das Verhältnis der Equivalente der mit Isocyanaten reagierenden Gruppen an monofunktionellen Verbindungen C) zu den Equivalenten der mit Isocyanaten reagierenden Gruppen an polyfunktionell reagierenden Verbindungen B) kleiner als 1.2 ist und die mit Isocyanaten polyfunktionell reagierenden Verbindungen B) eine mittlere Funktionalität kleiner als 2,5 haben und der Gewichtsanteil an Weichgruppen in den Di- oder höherfunktionellen Isocyanaten und in den Di- oder höherfunktionellen mit Isocyanaten reagierenden Komponenten kleiner als 25 Gew.-% ist.

Erfindungsgemäß bezieht sich der Begriff der Equivalente (Eq.) wie im Sprachgebrauch der Chemie üblich, auf die in der Reaktion vorliegende relative Anzahl der reagierenden Gruppen. Dies sind erfindungsgemäß die mit Isocyanaten reagierenden Gruppen wie Alkohole oder Amine. Im Fall der Alkohole folgt z.B. beim Einsatz von 1 Mol Monoalkohol = 1 Equivalent und 1 Mol Diol (also 2 Mol OH-Gruppen) = 2 Equivalente ein erfindungsgemäßes Verhältnis von 1 Eq. : 2 Eq. = 0,5.

Der für die erfindungsgemäße Beschreibung notwendige Begriff einer "mittleren Funktionalität von mit Isocyanaten polyfunktionell reagierenden Verbindungen" beschreibt das arithmetische Mittel über die Stoffmengenanteile der mit Isocyanaten polyfunktionell reagierenden Verbindungen gewichtet mit ihrer Funktionalität. Verwendet man z.B. 1 Mol Trimethylolpropan (Funktionalität 3) und 2 Mol Ethylenglycol (Funktionalität 2) so ergibt sich daraus eine mittlere Funktionalität von 1 Mol / (1 Mol + 2 Mol) · 3 + 2 Mol / (1 Mol + 2 Mol) · 2 = 2,33.

Der für die erfindungsgemäße Beschreibung notwendige Begriff "des Gewichtsanteils an Weichgruppen" bezieht sich auf die chemischen Substrukturen in den mindestens difunktionellen Aufbaukomponenten. Zu diesen chemischen Substrukturen zählen
1.) acyclische Methylengruppen (-CH₂-),
2.) -CHR-, -CR₂-Gruppen, die ausschließlich Sauerstoffatome und/oder Methylengruppen benachbart haben, und R eine nicht bei der Urethanisierung/Harnstoffbildung mit reagierende Gruppe mit maximal 16 Kohlenstoffatomen darstellt,
3.) Ether-Sauerstoffatome,
4.) Thioether-Schwefelatome,
5.) Di- und/oder Polysulfid-Schwefelgruppen,
6.) -O-Si(Me)₂-O-Gruppen und
7.) Olefingruppen (-CH=CH-).

Der Gewichtsanteil an Weichgruppen einer einzelnen mindestens difunktionellen Aufbaukomponente errechnet sich z.B. für Hexandiol zu dem Gewichtsanteil der 6 Methylengruppen zum Gesamtmolekülgewicht (hier: 6.14/118 = 71 %), für Isophorondiisocyanat (1 azyklische Methylengruppe = 14/222 = 6,3 %), für Diethylenglycol (4 Methylengruppen, 1 Ethersauerstoff : (4.14+1.16)/106 = 67,9 %), für Propylenglycol (1 Methylengruppe, eine mit einer Methylgruppe substituierte CHR-Gruppe: (14+(15+13))/76 = 55,2 %), für Toluidindiisocyanat (keine Weichgruppe also 0 %) usw. Der erfindungsgemäße Gewichtsanteil an Weichgruppen des Urethanacrylats errechnet sich nun aus der Summe der Gewichtsanteile der mindestens difunktionellen Aufbaukomponenten jeweils gewichtet mit deren wie oben beschriebenen Weichanteilgehalten.

Die Isocyanate A) können aliphatisch oder aromatisch sein: Cyclohexylisocyanat, Butylisocyanat, Phenylisocyanat, Toluolylisocyanat, 1,4-Tetramethylendiisocyanat, 1,6-Hexamethylen-diisocyanat (HDI), 1,8-Octamethylendiisocyanat, 1,11-Undecamethylendiisocyanat, 1,12-Dodekamethylendiisocyanat, 2,2,4- bzw. 2,4,4-Trimethyl-1,6-hexamethylendiisocyanat (TMDI), 1,3- und 1,4-Cyclohexandiisocyanat, 1-Isocyanato-3-Isocyanatomethyl-3,5,5-trimethylcyclohexan (IPDI), 1-Isocyanato-1-methyl-4(3)-isocyanatomethylcyclohexan (IMCI), 1,4-Phenylendiisocyanat, 1,5-Naphtylendiisocyanat, 1-Isocyanato-2-isocyanatomethylcyclopentan, (4,4'- und/oder 2,4'-) Diisocyanato-dicyclohexylmethan (H12-MDI, W), Bis-(4-Isocyanato-3-methylcyclohexyl)-methan, Xylylendiisocyanat (XDI), Tetramethyl-1,3- und/oder -1,4-xylylendiisocyanat (TMXDI), 1,3-und/oder 1,4-Hexahydro-xylylendiisocyanat (H6-XDI), 2,4- und/oder 2,6-Hexahydrotoluylendiisocyanat (H6-TDI), 2,4- und/oder 2,6-Toluoldiisocyanat (TDI), 4,4'- und/oder 2,4'-Diphenylmethandiisocyanat (MDI) oder deren Derivate mit Urethan-, Isocyanurat-, Allophanat-, Biuret-, Uretdion-, Iminooxadiazindionstruktureinheiten, solange sie mindestens eine freie NCO-Gruppe besitzen sowie deren Mischungen. Bevorzugt sind IPDI, TDI, H12-MDI, H6-XDI sowie deren Mischungen. Besonders bevorzugt sind TDI, IPDI und H12-MDI.

Komponente B) können Polyole wie Ethylenglykol, 1,2- und 1,3-Propandiol, die isomeren Butandiole, Neopentylglycol, 1,6-Hexandiol, 2-Methyl-propandiol-1,3, 2,2,4-Trimethylpentandiol-1,3, 2-n-Butyl-2-ethyl-propandiol-1,3, Glycerinmonoalkanoate (wie z.B. die Glycerinmonostearate), Dimerfettalkohole, Diethylenglycol, Triethylenglycol, Tetraethylenglycol, 1,4-Dimethylolcyclohexan, Dodekandiol, Bisphenol-A, hydriertes Bisphenol A, Hexandiol-1,3, Oktandiol-1,3, Dekandiol-1,3, 3-Methylpentandiol-1,5, 3,3-Dimethylbutandiol-1,2, 2-Methyl-pentandiol-1,3, 2-Methylpentandiol-2,4, 3-Hydroxymethyl-heptanol-4, 2-Hydroxymethyl-2,3-dimethyl-pentanol-1, Glycerin, Trimethylolethan, Trimethylolpropan, Trimerfettalkohole, isomere Hexantriole, Sorbit, Pentaerythrit, Ditrimethylolpropan, Dipentaerythrit, Diglycerin, Tricyclodekanalkohol (TCD) sein.

Ebenfalls erfindungsgemäß einsetzbar sind OH-funktionelle Ester mit einem zahlenmittleren Molekulargewicht Mₙ < 2 000, bevorzugt Mₙ < 500, die durch Umsetzung der oben genannten Polyole mit ε-Caprolacton gewonnen werden. Anwendung finden auch ungesättigte Ester, die neben den genannten Alkoholen aus ungesättigte Säuren oder Alkoholen bestehen wie: Maleinsäure(anhydrid), Fumarsäure, Itaconsäure, Citraconsäure(anhydrid), Aconitsäure, Tetrahydrophthalsäure(anhydrid), 3,6-Endomethylen-1,2,3,6-tetrahydrophthalsäure(anhydrid).

Es kommen auch (Meth)acryloylgruppen aufweisende Alkohole und Amine oder im wesentlichen aus diesen bestehenden Umsetzungsprodukte in Betracht, die durch Kondensation von n-wertigen Alkoholen oder Aminen oder Aminoalkoholen mit (Meth)Acrylsäure erhalten werden, wobei als Alkohole, Amine oder Aminoalkoholen auch Gemische eingesetzt werden können. Zu diesen Verbindungen bzw. Produktgemischen gehören beispielsweise die Umsetzungsprodukte von Glycerin, Trimethylolpropan und/oder Pentaerythrit, von niedermolekularen Alkoxylierungsprodukten derartiger Alkohole, wie beispielsweise ethoxylierten oder propoxylierten Trimethylolpropan mit (Meth)Acrylsäure.

Zur Anwendung kommen erfindungsgemäß auch mit Isocyanaten reagierenden Gruppen, die zusätzlich noch in die Urethanacrylate eingebaut werden, wie z.B. Dimethylolpropionsäure (DMPS), N-Methyldiethanolamin, N-Ethyldiethanolamin, N(tert.)-Butyldiethanolamin, N-Isopropyldiethanolamin, N-n-Propyldiethanolamin, N-Hexyldiethanolamin, N-Phenyldiethanolamin, N-Benzyldiethanolamin, N-Tolyldiethanolamin, N-Lauryl-diethanolamin, N-Stearyl-diethanolamin, Triethanolamin, Tris(2-aminoethyl)amin, N,N-Bis(2-Hydroxyethyl)ethylendiamin, 2-(2-Dimethylaminoethylamino)ethanol, 2-(2-Diethylaminoethylamino)ethanol, Bis-2-(Methylaminoethyl)-methylamin, 1,4,7-Triethyldiethylentriamin. Gegebenenfalls werden auch Mischungen verschiedener Urethanacrylate hergestellt, die einerseits DMPS andererseits ein oben beschriebenes tertiäres Amin enthalten.

Anstatt oder in Kombination mit einem Polyol lassen sich auch folgende Amine verwenden, um Harnstoffacrylate herzustellen; Ethanolamin, N-Methyl-ethanolamin, N-Ethyl-ethanolamin, 2-Amino-propanol-1, Tetramethylxylylenediamin, Ethylendiamin, 1,6-Hexamethylendiamin, Isophorondiamin (IPDA), (4,4'- und/oder 2,4'-)Diamino-dicyclohexylmethan, (4,4'- und/oder 2,4'-)Diamino-3,3'-dimethyldicyclohexylmethan.

Alle genannten di- oder polyfunktionellen mit Isocyanaten reaktiven Substanzen können auch in Mischungen verwendet werden.

Bevorzugt sind Ethylenglykol, 1,2- und 1,3-Propandiol, die isomeren Butandiole, Neopentylglycol, 1,6-Hexandiol, 2-Ethylhexandiol-1,3, Perhydrobisphenol, 4,8-Bis-(hydroxymethyl)-tricyclo[5.2.0(2.6)]-dekan (TCD-Alkohol). Besonders bevorzugt sind Ethylenglykol, 1,2-Propandiol und 1,4-Butandiol.

Als Komponente C) eignen sich aliphatische und aromatische Alkohole wie Methanol, Ethanol, N-Propanol, Isopropanol, Butanol, Hexanol, Fettalkohole, Phenole etc. sowie insbesondere Hydroxyalkyl(meth)acrylate mit 2 bis 12 Kohlenstoffatomen in der Alkylkette, vorzugsweise 2 bis 4 Kohlenstoffatomen im Hydroxyalkylrest wie Hydroxyethyl(meth)-acrylat, 2- und 3-Hydroxypropyl(meth)acrylat und 2-, 3- und 4-Hydroxybutyl(meth)acrylat, weiterhin OH funktionelle Vinylether, wie z.B. Hydroxybutylvinylether sowie deren Mischungen.

Als Komponente C) kann auch im Mittel 0,3-1,5-fach OH-funktioneller (Meth)acrylsäureester bzw. -amide n-wertiger Alkoholen oder Aminen oder Aminoalkoholen verwendet werden, wobei auch Gemische eingesetzt werden können. Zu diesen Verbindungen bzw. Produktgemischen gehören beispielsweise die Ester des Glycerins, Trimethylolpropans und/oder Pentaerythrits. Ebenfalls können definierte Monoalkohole aus der Umsetzung von epoxyfunktionellen (Meth)-acrylsäureester mit (Meth)Acrylsäure erhalten werden. So ergibt die Umsetzung von Glycidylmethacrylat mit Acrylsäure einen gemischten Acrylsäure- Methacrylsäureester des Glycerins, der ebenfalls vorteilhaft verwendet werden kann.

Bevorzugt sind Hydroxyethylacrylat und die isomeren Hydroxypropylacrylate.

Die Umsetzung von hydroxyfunktionellen Acrylaten mit Isocyanaten ist bekannt, z.B. aus P. K. T. Oldring (Ed.), Chemistry & Technology of UV & EB Formulations For Coatings, Inks & Paints, Vol. 2, 1991, SITA Technology, London, D. 73 - 97.

Die Herstellung kann so durchgeführt werden, dass 1.) entweder die isocyanathaltigen Bestandteile A) vorgelegt werden und unter Durchleiten eines sauerstoffhaltigen Gases, vorzugsweise Luft, bei einer Temperatur oberhalb des Schmelzpunktes bzw. Erweichungstemperatur des herzustellenden Produktes im Temperaturbereich 30 bis 150°C, vorzugsweise 70 bis 130°C, besonders bevorzugt 80 bis 120°C mit B) und C) umgesetzt werden, bis der NCO-Gehalt im Falle der Einsatzverhältnisse NCO: OH = 1 auf den gewünschten Wert, bevorzugt unter 0,3 Gew.-%, besonders bevorzugt unter 0,1 Gew.-% gefallen ist. Dabei kann es 2.) zweckmäßig sein B) und C) getrennt nacheinander, getrennt gleichzeitig oder als Mischung zuzudosieren. Bevorzugt wird als Mischung zudosiert.

Ebenso ist es auch möglich, 3.) B) und C) vorzulegen und A) zuzudosieren. Auch eine vierte Vorgehensweise erst B) vorzulegen dann C) zuzudosieren und schließlich A) zuzugeben kann vorteilhaft sein. 5.) Die Reihenfolge von A) und B) in 4.) kann vertauscht werden. Besonders bevorzugt wird Variante 1).

Der Reaktivverdünner wird bevorzugt zu Beginn in die vorgelegte Komponente mit hinzugefügt, kann aber auch später zudosiert werden. Ein mit Isocyanaten (partiell) reaktiver Reaktivverdünner wird bevorzugt zusammen mit B) und/oder C) in die Reaktionsmischung eingeführt. Es ist auch möglich den Reaktivverdünner erst später dem schon teilweise umgesetzten Produkt aus A), B), C) oder A) und B) oder A) und C) zuzusetzen. Auch ein nachträgliches Einarbeiten / Einextrudieren ist möglich. Bevorzugt ist die Addition des Reaktivverdünners zu Beginn der Synthese.

Die Herstellung des Urethans kann auch zweckmäßig in zwei Stufen erfolgen. Dabei wird in einem ersten Schritt ein weiterhin isocyanathaltiges Prepolymer hergestellt, das in einem zweiten Schritt mit weiteren Alkohol umgesetzt wird. Bevorzugt wird hier das im ersten Schritt die Monoole mit den Isocyanat umgesetzt werden. Der Reaktivverdünner kann in dieser Verfahrenweise sowohl zu Beginn bei der Herstellung des Prepolymers zugegeben werden oder aber auch in der zweiten Stufe addiert werden.

Die zum Urethan (gegebenenfalls Harnstoff) führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Das als Umsetzungsprodukt erhalten Urethanacrylat wird üblicherweise durch Zugabe geeigneter Inhibitoren bzw. Antioxidantien wie beispielsweise Phenole und/oder Hydrochinone und/oder stabiler N-Oxylradikale und/oder Phenothiazin oder anderer Radikalfänger in Mengen von jeweils 0,0005 bis 0,3 Gew-% bezogen auf die Harzschmelze, vor vorzeitiger und unerwünschter Polymerisation geschützt. Der Zusatz dieser Hilfsmittel kann vor, gleichzeitig und/oder in Anschluss an die zum Polyurethan (Harnstoff) führende Umsetzung erfolgen.

Neben einer diskontinuierlichen Fahrweise ist es auch weiterhin möglich, die Umsetzungen in einem Rohrreaktor, statischen Mischer oder Reaktionsextruder bzw. Reaktionskneter durchzuführen. Vorteilhaft sind dabei die kürzeren Reaktionszeiten, wobei auch höhere Temperaturen (80 - 220°C) verwendet werden können.

Ein weiterer Gegenstand der Erfindung sind Pulverlacke enthaltend
i) mindestens ein erfindungsgemäßes Pulverlackbindemittel,
ii) gegebenenfalls weitere von i) verschiedene ungesättigte Bindemittel mit unter Einwirkung aktinischer Strahlung mit ethylenisch ungesättigten Verbindungen unter Polymerisation reagierenden Gruppen (strahlenhärtende Gruppen),
iii) gegebenenfalls in der Lackchemie übliche Hilfs- und Zusatzstoffe wie Pigmente, Verlaufsmittel, Entlüftungsmittel, tribologisch wirksame Additive und/oder Thioxotropiermittel und
iv) mindestens einen thermisch oder photochemisch aktivierbaren Radikalbildner.

Die erfindungsgemäßen Pulverlacke haben Glasübergangstemperaturen von 35 bis 80°C, vorzugsweise 35 bis 70°C, besonders bevorzugt 45 bis 60°C. Dies hängt im besonderen Maße von der Art der Aufbaukomponenten ab und zusätzlich von dem Molekulargewicht und der Menge an Reaktivverdünner. Da mit steigendem Molekulargewicht auch mehr Reaktivverdünner verwendet werden kann und somit Harze mit gleichen Glasübergangstemperaturen erhältlich sind, kann hiermit die Menge an Reaktivverdünner und damit der Gehalt an strahlenhärtenden Funktionalitäten variiert werden.

Die pulverförmigen Überzugsmittel auf Basis der erfindungsgemäßen Pulverlackbindemittel können auch ohne weitere Zusätze als thermisch vernetzbare Pulver-Klarlacke verarbeitet werden (in welchem Fall das Bindemittel mit dem Überzugsmittel identisch wäre). Als in der Lacktechnologie übliche Hilfs- und Zusatzmittel können beispielsweise Pigmente, wie z.B. Titandioxid, Verlaufsmittel, wie z.B. Polybutylacrylat oder Silicone, Entlüftungsmittel wie z.B. Benzoin, tribologisch wirksame Additive wie z.B. aliphatische Amine, Thixotropiermittel und/oder andere Zusatzstoffe versehen und z.B. auf Extrudern oder Knetern bei Temperaturen von 40 bis 140°C, vorzugsweise 70 bis 120°C, homogen eingearbeitet werden. Die obengenannten Hilfs- und Zusatzmittel können sofort nach Ende, während oder bereits zu Beginn der Herstellung in die Reaktionsmischung bzw. Harzschmelze zugefügt werden.

Der anfallende Feststoff wird dann in an sich in bekannter Weise gemahlen und durch Sieben von groben Kornanteilen, vorzugsweise zumindest von solchen mit einer oberhalb 0,1 mm liegenden Korngröße befreit.

Die erfindungsgemäß hergestellten Pulverlacke können nach üblichen Pulverauftragsverfahren, wie z.B. elektrostatischen Pulversprühen, triboelektrischem Auftrag oder Wirbelsintern, auf die zu überziehenden Substrate aufgebracht werden. Die Überzüge werden dann zunächst durch Einwirkung von Hitze (z.B. durch IR-Strahler) geschmolzen, es bildet sich ein klarer Film, sofern keine Pigmente o. ä. eingearbeitet wurden. Die notwendige Temperatur liegt über 50°C, vorzugsweise über 70°C, besonders bevorzugt über 80°C. Die Härtung der Überzüge kann entweder durch Erhitzen auf 130 bis 220°C, vorzugsweise 150 bis 190°C, und/oder durch die Einwirkung von energiereicher Strahlung wie UV- oder Elektronenstrahlung erfolgen. Elektronenstrahlung wird wie dem Fachmann bekannt ist, mittels thermische Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben. In der Elektronenstrahlhärtung benötigt man keinen Photoinitiator.

Im Falle der Vernetzung mittels UV-Strahlung werden in die Überzugsmassen Fotoinitiatoren möglichst homogen eingearbeitet. Als Fotoinitiatoren sind die üblicherweise eingesetzten Verbindungen geeignet, wenn sie die Pulvereigenschaften wie Rieselfähigkeit und Lagerfähigkeit nicht negativ beeinflussen. Beispiele hierfür sind 1-Hydroxycyclohexylphenylketon, Benzidimethylketal oder - bei pigmentierten Systemen - 2-Methyl-1-(4-(methythio)phenyl-2-morpholino-propanon-1 oder Trimethyl-benzoyl-diphenyl-phosphinoxid.

Die Fotoinitiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Im Falle einer thermischen Härtung, kann diese auch unter Zusatz von thermisch zerfallenden Radikalbildnern erfolgen. Geeignet sind, wie dem Fachmann bekannt ist, z.B. Peroxyverbindungen wie Diacylperoxide z.B. Benzoylperoxid, Alkylhydroperoxide wie z.B. Diisopropylbenzolmonohydroperoxid, Alkylperester wie z.B. tert.-Butylperbenzoat, Dialkylperoxide wie z.B. Di.-tert.butylperoxid, Peroxidicarbonate wie z.B. Dicetylperoxiddicarbonat, anorganische Peroxide wie z.B. Ammoniumperoxodisulfat, Kaliumperoxodisulfat, oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide, 2,2'-Azobis{2-methyl-N-[1, 1-bis(hydroxymethyl)-2-hydroxyethyl]propionamide. Besonders geeignet sind Initiatoren in fester Form mit einem Schmelzpunkt unter 130°C und einer Halbwertszeit im Minutenbereich bei einer Zersetzungstemperatur oberhalb von 100°C. Ebenfalls ist es vorteilhaft für eine thermische Härtung mittels eines Initiators die Konzentration an Stabilisatoren zu minimieren.

Die erfindungsgemäßen Pulverlacke eignen sich zur Beschichtung von Substraten aus Holz, Metall, Kunststoff, mineralischen Stoffen und/oder bereits beschichteten Substraten hieraus oder von Substraten hieraus, die aus beliebigen Kombinationen der genannten Materialen bestehen. Insbesondere seien hier Anwendungen in der Industrielackierung von MDF-Platten, vormontierten höherwertigen Gütern, die bereits temperaturempfindliche Baugruppen enthalten wie z.B. elektronischen Baugruppen, aber auch die Lackierung von Möbeln, Coils, Gegenständen des täglichen Lebens, Automobilkarossen und deren Anbauteile genannt.

Die erfindungsgemäßen Pulverlackbindemittel können dabei auch in Kombination miteinander oder mit anderen in der Pulverlackchemie üblichen Bindemitteln gemeinsam verwendet werden; wie z.B. mit Polyestern, Polyacrylaten, Polyethern, Polyamiden, Polycarbonaten, die auch gegebenenfalls ungesättigte Gruppen enthalten können. Geeignete ungesättigte Gruppen sind Acrylat-, Methacrylat-, Fumar-, Malein-, Vinyl- und/oder Vinylethergruppen. Die Mengenverhältnisse werden dahingehend bestimmt, dass die Doppelbindungsdichte der resultierenden Mischung nicht 1,0 Mol Doppelbindungen pro Kilogramm unterschreitet, da dann oft keine ausreichende Härtung mehr möglich ist.

Die Pulverlackbindemittel können auch in Klebstoffen und Dichtungsmassen verwendet werden. Voraussetzung hierbei ist es im Falle der UV-Stahlenhärtung, dass mindestens eines der beiden zu verklebenden oder miteinander abzudichtenden Substrate für UV-Strahlung durchlässig, also in der Regel transparent sein muss. Bei der Elektronenstrahlung ist auf eine hinreichende Durchlässigkeit für Elektronen zu achten. Geeignete Substrate bestehen aus Holz, Metall, Kunststoff, mineralischen Stoffen und/oder bereits beschichteten Substraten bzw. Mischung aus diesen Substraten.

Die erfindungsgemäßen Pulverlackbindemittel eigenen sich auch als Komponenten oder Härtmassen in Form-, Spritz- und Druckgussverfahren. Dabei wird ein zu beschichtendes Objekt in eine Form eingebracht, wobei noch ein Abstand von maximal 1 cm, bevorzugt kleiner 0,3 cm zwischen Objektoberfläche und Form verbleibt. Das erfindungsgemäße Pulverlackbindemittel wird nun bevorzugt über einen Extruder in die Form verpresst und anschließend thermisch und/oder mittels Strahlung gehärtet.

### Beispiele

In den nachfolgenden Beispielen beziehen sich alle Prozentangaben auf das Gewicht.

Die Glasübergangstemperatur Tg wurde mit einem Differential Scanning Kalorimeters (Typ DSC 12E, Metler-Toledo GmbH, Giessen, DE) in einem Temperaturintervall von -15°C bis +150°C (Aufheizrate 10K/Minute) bestimmt.

Die Ermittlung des NCO-Gehaltes erfolgte durch Titration gemäß DIN 53 185.

### Erfindungsgemäße Beispiele

### Beispiel 1a

In einem Planschlifftopf wurden 482,22 g Isophorondiisocyanat, 0,28 g 2,5-Di-tert.-butylhydrochinon, 0,70 g 2,6-Di-tert.-butyl-4-methylphenol, 0.35 g Desmorapid® Z (Dibutylzinndilaurat) (Bayer AG, Leverkusen, DE) und 0,70 g p-Methoxyphenol vorgelegt und auf 90°C erwärmt. Nun wurde unter Wärmeentwicklung eine Mischung aus 114,10 g Hydroxyethylacrylat und 101,64 g Ethylenglycol zudosiert, die Temperatur wurde dabei zunächst bei 90°C gehalten und mit zunehmender Viskosität bis auf 130°C erhöht. Nach 1h Rühren wurde ein NCO-Gehalt von 0,43 Gew.-% erreicht. Die Schmelze wurde in eine Schale überführt und erkalten gelassen. Die Glastemperatur des amorphen, glasharten, spröden Produkts betrug 73,7°C.

### Beispiel 1b

In einen Reaktionsgefäß mit Glasaufsatz und Innenthermometer wurden 60 g des Produktes aus Beispiel 1a und 15 g Dipentaerythritpentaacrylat (Sartomer® SR 399, Cray Valley, Paris La Defense Cedex, Frankreich), vorgelegt und auf 120°C aufgeheizt. Nach 1h Rühren wurde abgekühlt, wobei ein Produkt mit einer Glasübergangstemperatur von 51,3°C erhalten wurde.

### Beispiel 2a

In einem Planschlifftopf wurden 459,30 g Isophorondiisocyanat, 0,28 g 2,5-Di-tert.-butylhydrochinon, 0,70 g 2,6-Di-tert.-butyl-4-methylphenol, 0,35 g Desmorapid® Z (Dibutylzinndilaurat) (Bayer AG, Leverkusen, DE) und 0,70 g p-Methoxyphenol vorgelegt und auf 90°C erwärmt. Nun wurde unter Wärmeentwicklung eine Mischung aus 153,96 g Hydroxyethylacrylat und 84,71 g Ethylenglycol zudosiert, die Temperatur wurde dabei zunächst bei 90°C gehalten und mit zunehmender Viskosität bis auf 120°C erhöht. Nach 1h Rühren wurde ein NCO-Gehalt von 0,23 Gew.-% erreicht. Die Schmelze wurde in eine Schale überführt und erkalten gelassen. Die Glastemperatur des amorphen, glasharten, spröden Produkts betrug 59,0°C.

### Beispiel 2b

In einem Reaktionsgefäß mit Glasaufsatz und Innenthermometer wurden 67,5 g des Produktes aus Beispiel 2a und 7,5 g Dipentaerythritpentaacrylat (Sartomer® SR 399, Cray Valley, Paris La Defense Cedex, Frankreich) vorgelegt und auf 120°C aufgeheizt. Nach 1h Rühren wurde abgekühlt, wobei ein Produkt mit einer Glasübergangstemperatur von 48,5°C erhalten wurde.

### Beispiel 3

In ein Reaktionsgefäß wurden 37,70 g Isophorondiisocyanat, 0,03 g 2,5-Di-tert.-butylhydrochinon, 0,076 g 2,6-Di-tert.-butyl-4-methylphenol, 0,076 g p-Methoxyphenol, 8,34 g 1,2-Ethandiol, 5,95 g 2-Hydroxyethylacrylat, 22,79 g Dipentaerythritpentaacrylat (Sartomer® SR 399, Cray Valley, Paris La Defense Cedex, Frankreich) vorgelegt. Nun wurde unter Rühren die Temperatur 1 h lang bei 80°C, dann 2 h bei 90°C gehalten. Dann wurden 0,04 g Desmorapid® Z (Dibutylzinndilaurat) zugesetzt und weitere 30 Minuten lang gerührt. Abschließend wurde 100 Minuten lang auf 100°C unter Rühren erwärmt und weitergerührt. Es wurde ein NCO-Gehalt < 0,07 Gew.-% erhalten. Man ließ die Reaktionsmischung erkalten. Die Glastemperatur des amorphen, glasharten, spröden Produkts betrug 49,5°C.

### Beispiel 4

In ein Reaktionsgefäß wurden 33,36 g Isophorondiisocyanat, 0,03 g 2,5-Di-tert.-butylhydrochinon, 0,076 g 2,6-Di-tert.-butyl-4-methylphenol, 0,076 g p-Methoxyphenol, 8,44 g 1,2-Ethandiol, 2,63 g 2-Hydroxyethylacrylat, 30,35 g Dipentaerythritpentaacrylat (Sartomer® SR 399, Cray Valley, Paris La Defense Cedex, Frankreich) vorgelegt. Nun wurde unter Rühren die Temperatur 1 h lang bei 80°C, dann 2 h bei 90°C gehalten. Nun wurden 0,04 g Desmorapid® Z (Dibutylzinndilaurat) zugesetzt und weitere 30 Minuten lang gerührt. Abschließend wurde 100 Minuten lang auf 100°C unter Rühren erwärmt und weitergerührt. Es wurde ein NCO-Gehalt < 0,02 Gew.-% erhalten. Man ließ erkalten. Die Glastemperatur des amorphen, glasharten, spröden Produkts betrug 52,3°C.

### Beispiele 5-20

Die folgenden Beispiele wurden analog Beispiel 3 und 4 hergestellt. Es wurden die gleichen Mengen an Stabilisatoren (2,5-Di-tert.-butylhydrochinon, 2,6-Di-tert.-butyl-4-methylphenol, p-Methoxyphenol) und Katalysator Desmorapid® Z (Dibutylzinndilaurat) verwendet.

**Tabelle 1: Erfindungsgemäße Bindemittel für Pulverlacke auf Urethanacrylatbasis mit Reaktivverdünner.**

| **Beispiel** | **Diol** | **Monool** | **Diisocyanat** | **Reaktivverdünner** | **T_{g}/°C** |
|---|---|---|---|---|---|
| 5 | 10,78 g ED | 7,68 g HEA | 48,69 g IPDI | 7,63 g TMPTA | 64,7 |
| 6 | 10,18 g ED | 7,26 g HEA | 46,00 g IPDI | 11,34 g TMPTA | 56,6 |
| 7 | 9,58 g ED | 6,82 g HEA | 43,27 g IPDI | 15,12 g TMPTA | 49,0 |
| 8 | 8,97 g ED | 6,39 g HEA | 40,53 g IPDI | 18,88 g TMPTA | 41,4 |
| 9 | 9,57 g ED | 6,82 g HEA | 43,22 g IPDI | 15,17 g TMPTMA | 51,8 |
| 10 | 10,17 g ED | 7,25 g HEA | 45,94 g IPDI | 15,24 g IDMA | 55,0 |
| 11 | 10,22 g ED | 3,19 g HEA | 40,39 g IPDI | 27,5 g TMPTA | 49,8 |
| 12 | 9,35 g ED | 2,91 g HEA | 43,77 g W | 18,75 g TMPTA | 49,1 |
| 13 | 10,24 g ED | 3,19 g HEA | 40,50 g IPDI | 20,85 g TPGDA | 53,6 |
| 14 | 10,17 g ED | 7,25 g HEA | 45,94 g IPDI | 11,43 g IBOMA | 57,0 |
| 15 | 10,64 g ED | 3,32 g HEA | 42,07 g IPDI | 18,75 g HDDA | 52,8 |
| 16 | 12,67 g ED | 3,95 g HEA | 39,26 g TDI | 18,75 g TMPTA | 44,0 |
| 17 | 7,74 g ED | 2,70 g HPA | 30,59 g IPDI | 33,75 g DPEPA | 50,7 |
| 18 | 10,07 g PD | 7,32 g HEA | 37,14 g IPDI | 20,25 g DPEPA | 42,7 |
| 19 | 11,04 g PD | 8,03 g HEA | 40,71 g IPDI | 15,00 g DPEPA | 54,6 |
| 20 | 9,33 g ED | 8,31 g HEA | 42,15 g IPDI | 15,00 g TCDDMA | 50,6 |
| Diole: ED: 1,2-Ethandiol; PD: 1,2-Propandiol | | | | | |
| Monool: HEA: Hydroxyethylacrylat; HPA: Hydroxylpropylacrylat | | | | | |
| Diisocyanat: IPDI: Isophorondiisocyanat = 1-Isocyanato-3-Isocyanatomethyl-3,5,5-trimethylcyclohexan; W: Diisocyanato-dicyclohexylmethan (H12-MDI); TDI: 80:20 Mischung aus 2,4- zu 2,6-Diisocyanatotoluol | | | | | |
| Reaktivverdünner: TMPTA: Trimethylolpropantriacrylat; TMPTMA: Trimethylolpropantrimethacrylat; IDMA: Isodecylmethacrylat; IBOMA: Isobornylmethacrylat; HDDA: Hexandioldiacrylat, DPEPA: Dipentaerythritpentaacrylat, TCDDMA: Tricyclodecandimethyloldimethacrylat | | | | | |

### Beispiel 21: Polyacrylat und Reaktivverdünner

In einen Alubecher mit Glasaufsatz und Innenthermometer wurden 27,0 g Joncryl® 587 (Polyacrylatpolyol mit einer OH-Zahl von 92, Equivalentgewicht 609 und T_{g} = 50°C, S. C. Johnson Polymer BV., Niederlande) und 3 g Trimethylolpropantrimethacrylat vorgelegt und auf 120°C aufgeheizt. Nach 1h Rühren wurde abgekühlt. Man erhielt ein Produkt mit einer Glasübergangstemperatur von 38,3°C.

### Beispiel 22a: 2-Stufen-Fahrweise

In einem Dreihalskolben mit Rückflusskühler und Tropftrichter wurden 87,88 g Pentaerythrittriacrylat, 24,31 g Hydropropylacrylat, 0,13 g 2,6-Di-tert.-butyl-4-methylphenol, 0,06 g Desmorapid® Z (Dibutylzinndilaurat) (Bayer AG, Leverkusen, DE) und 0,13 g p-Toluolsulfonsäuremethylester vorgelegt und auf 50°C erwärmt. Nun tropft innerhalb von 20 Minuten 137,5 g Isophorondiisocyanat langsam zu und hielt dabei die Temperatur auf 55 °C. Man rührte weitere 3,5 Stunden und erhielt ein flüssiges Prepolymer mit einem NCO-Gehalt von 14,1 Gew.-%.

### Beispiel 22b: 2-Stufen-Fahrweise

In ein Reaktionsgefäß bestehend aus Metalldose (bevorzugt aus Aluminium), Glaskappe mit Druckausgleich und Öffnung für einen KPG-Rührer, dadurch temperiert das die Dose in einem Metallblock steht, wurden 107 g des Produkts aus Beispiel 22a, 0,05 g 2,5-Di-tert.-butylhydrochinon, 0,09 g 2,6-Di-tert.-butyl-4-methylphenol, 0,12 g p-Methoxyphenol, 11,2g g 1,2-Ethandiol vorgelegt. Nun wurde unter Rühren für 1 h auf 90°C erhitzt. Dann wurden 0,09 g Desmorapid® Z (Dibutylzinndilaurat) zugesetzt und weitere 2 Stunden bei 120°C gerührt. Es wurde ein NCO-Gehalt von 0,02 Gew.-% erhalten. Man ließ erkalten. Die Glastemperatur des amorphen, glasharten, spröden Produkts betrug 37,0°C.

### Beispiel 23 (Exemplarischer Beschichtungsvorgang mit dem Bindemittel aus Beispiel 3)

Das Produkt aus Beispiel 1b wurde mit einem Häcksler der Firma Alpine Typ: 10 / 6 ROL gehäckselt. In einem Premixgefäß wurden 97,0 Gew.-% dieses Edukts, 1,0 Gew.-% des Verlaufmittels Worléeadd 101 (Fa. Worlée-Chemie GmbH, Lauenburg, DE) und 2,0 Gew.-% Photoinitiator Darocur® 1173 (Ciba Spezialitätenchemie GmbH, Lampertheim, DE) eingewogen und in einem Premixer Prism Pilot 3 (Premixeinstellung 60 sec / 1500 UPM) vorgemischt. Anschließend wurde in einem APV - Extruder (HP 19 PC) mit den folgenden Einstellungen extrudiert: Zone 1: Sollwert RT / Zone 2 : Sollwert RT / Drehzahl : 300 rpm / gemessene Temperatur der Schmelze: 55°C / Dosiereinstellung 3,0 / Auslastung am Extruder durchschnittlich 55 %. Die erhaltenen Chips wurden über Nacht in einem Kühlschrank (Liebherr - Profi Line) bei 4°C gekühlt, danach wurden sie auf einer Mühle Neumann & Esser Typ : ICM 4 gemahlen: (Sichter 15 m/s; Rotor 60 m/s), mit einem 90 µm Sieb gesiebt und umgehend mit einer Spritzpistole ITW Gema (50 - 60 mV; Druck variabel; Dosierung variabel) auf ein Q-Panel - Stahl gesprüht. Der Pulverlack wurde in einem Umluftofen 20 min. bei 130°C aufgeschmolzen und die heiße Stahlplatte wurde dann mit UV-Licht mit einem Gerät IST S131 P - 7FO (CK normal; Bandgeschwindigkeit 10 m/min) bestrahlt. Der Film war sofort hart und wurde nach dem Abkühlen auf Raumtemperatur (RT) und 60 min. Lagerung beurteilt. Die Schichtdicke war größer als 60 µm, die Korngröße x 50% = 30,3 µm. Die Lösemittelfestigkeit wird mittels eines in Aceton getränkten Wattebauschs, der mit einem Andruck von ca. 1 kg in 100 Doppelhüben über den Film bewegt wurde, beurteilt. Der Film war lösemittel- und kratzfest.

## Patentansprüche

1. Pulverlackbindemittel mit einer Glastemperatur von mindestens 35°C, enthaltend mindestens ein organisches Polymer ausgewählt aus der Gruppe bestehend aus Polyurethanen, Polyestern, Polyacrylaten, Polyethern, Polyamiden, Polycarbonaten und Mischungen der genannten Polymere sowie mindestens 2 Gewichtsprozent eines oder mehrerer strahlenhärtender Reaktivverdünner.

2. Pulverlackbindemittel nach Anspruch 1, **dadurch gekennzeichnet, dass** mindestens eines der enthaltenen organischen Polymere unter Einwirkung aktinischer Strahlung mit ethylenisch ungesättigten Verbindungen unter Polymerisation reagierende Gruppen (strahlenhärtende Gruppen) aufweist.

3. Pulverlackbindemittel nach Anspruch 1 oder 2, **dadurch gekennzeichnet, dass** sie eine Glastemperatur von mindestens 42°C besitzen.

4. Pulverlackbindemittel nach einem der Ansprüche 1 - 3, **dadurch gekennzeichnet, dass** 5 - 45 Gew.-% eines oder mehrerer strahlenhärtender Reaktivverdünner enthalten sind.

5. Pulverlackbindemittel nach einem der Ansprüche 1 - 4, **dadurch gekennzeichnet, dass** als Reaktivverdünner Trimethylolpropantriacrylat, Trimethylolpropantrimethacrylat, Dipentaerythritpentaacrylat und/oder Mischungen dieser Verbindungen eingesetzt werden.

6. Verfahren zur Herstellung von Pulverlackbindemitteln gemäß einem der Ansprüche 1 - 5, bei dem
a) ein oder mehrere organische Polymere ausgewählt aus der Gruppe bestehend aus Polyurethanen, Polyestern, Polyacrylaten, Polyethern, Polyamiden, Polycarbonaten und Mischungen der genannten Polymere während ihrer Herstellung oder im Anschluss daran,
b) mit mindestens 2 Gew.% einer oder mehrerer strahlenhärtender Reaktivverdünner vermischt werden,
wobei die Zusammensetzung der Komponenten a) und b) sowie deren Mengenverhältnis untereinander so zu wählen ist, dass eine Glastemperatur des erhaltenen Pulverlackbindemittels von mindestens 35°C resultiert.

7. Pulverlacke enthaltend
i) mindestens ein Pulverlackbindemittel gemäß einem der Ansprüche 1 bis 5,
ii) gegebenenfalls weitere von i) verschiedene ungesättigte Bindemittel mit unter Einwirkung aktinischer Strahlung mit ethylenisch ungesättigten Verbindungen unter Polymerisation reagierenden Gruppen (strahlenhärtende Gruppen),
iii) gegebenenfalls in der Lackchemie übliche Hilfs- und Zusatzstoffe wie Pigmente, Verlaufsmittel, Entlüftungsmittel, tribologisch wirksame Additive und/oder Thioxotropiermittel und
iv) mindestens einen thermisch oder photochemisch aktivierbaren Radikalbildner.

8. Verwendung der Pulverlackbindemittel nach einem der Ansprüche 1 - 5 und/oder Pulverlacke nach Anspruch 7 bei der Beschichtung von Substraten wie Holz, Metall, Kunststoff, mineralischen Stoffen und/oder bereits beschichteten Substraten oder von Substraten, die aus beliebigen Kombinationen der genannten Materialen bestehen.

9. Beschichtungen erhältlich aus Pulverlackbindemitteln nach einem der Ansprüche 1 - 5 und/oder Pulverlacken nach Anspruch 7.

10. Substrate beschichtet mit Beschichtungen nach Anspruch 9.

## Claims

1. Powder coating binders with a glass temperature of at least 35°C, containing at least one organic polymer selected from the group consisting of polyurethanes, polyesters, polyacrylates, polyethers, polyamides, polycarbonates and mixtures of the above polymers, together with at least 2 per cent by weight of one or more radiation-curing reactive thinners.

2. Powder coating binders according to claim 1, **characterised in that** at least one of the organic polymers contained exhibits groups reacting with ethylenically unsaturated compounds by polymerisation under the action of actinic radiation (radiation-curing groups).

3. Powder coating binders according to claim 1 or 2, **characterised in that** they have a glass temperature of at least 42°C.

4. Powder coating binders according to one of claims 1-3, **characterised in that** 5-45 wt.% of one or more radiation-curing reactive thinners are contained.

5. Powder coating binders according to one of claims 1-4, **characterised in that** trimethylolpropane triacrylate, trimethylolpropane trimethacrylate, dipentaerythritol pentaacrylate and/or mixtures of these compounds are used as the reactive thinners.

6. Process for the production of powder coating binders according to one of claims 1 - 5, in which
a) one or more organic polymers selected from the group consisting of polyurethanes, polyesters, polyacrylates, polyethers, polyamides, polycarbonates and mixtures of the above polymers, are mixed, during or following their production,
b) with at least 2 wt.% of one or more radiation-curing reactive thinners,
wherein the composition of components a) and b), and their quantitative ratio to one another, is to be selected such that a glass temperature of the powder coating binder obtained of at least 35°C results.

7. Powder coatings containing
i) at least one powder coating binder according to one of claims 1 to 5,
ii) optionally other unsaturated binders different from i) with groups reacting with ethylenically unsaturated compounds by polymerisation under the action of actinic radiation (radiation-curing groups),
iii) optionally auxiliary substances and additives conventional in paint chemistry, such as pigments, flow control agents, deaerating agents, tribologically active additives and/or thixotropic agents and
iv) at least one thermally or photochemically activated radical former.

8. Use of the powder coating binders according to one of claims 1 - 5 and/or powder coatings according to claim 7 in the coating of substrates such as wood, metal, plastic, mineral substances and/or substrates that have already been coated or of substrates consisting of any combinations of said materials.

9. Coatings obtainable from powder coating binders according to one of claims 1 - 5 and/or powder coatings according to claim 7.

10. Substrates coated with coatings according to claim 9.

## Revendications

1. Liant pour laque en poudre, avec une température de transition vitreuse d'au moins 35°C, contenant au moins un polymère organique choisi parmi le groupe consistant en des polyuréthannes, des polyesters, des polyacrylates, des polyéthers, des polycarbonates et des mélanges des polymères cités, ainsi qu'au moins 2% en poids d'un ou de plusieurs diluants réactifs radiodurcissables.

2. Liant pour laque en poudre suivant la revendication 1, **caractérisé en ce qu'**au moins un des polymères organiques présents présente des groupements réagissant par polymérisation avec des composés éthyléniquement insaturés sous l'action d'un rayonnement actinique (groupements radiodurcissables).

3. Liant pour laque en poudre suivant la revendication 1 ou 2, **caractérisé en ce qu'**il possède une température de transition vitreuse d'au moins 42°C.

4. Liant pour laque en poudre suivant l'une des revendications 1 à 3, **caractérisé en ce qu'**il contient 5 à 45% en poids d'un ou de plusieurs diluants réactifs radiodurcissables.

5. Liant pour laque en poudre suivant l'une des revendications 1 à 4, **caractérisé en ce que** l'on met en oeuvre comme diluant réactif, le triacrylate de triméthylolpropane, le triméthacrylate de triméthylolpropane, le pentaacrylate de dipentaérythritol et/ou des mélanges de ces composés.

6. Procédé de préparation de liants pour laque en poudre selon l'une des revendications 1 à 5, dans lequel on mélange
a) un ou plusieurs polymères organiques choisis parmi le groupe consistant en des polyuréthannes, des polyesters, des polyacrylates, des polyéthers, des polycarbonates et des mélanges des polymères cités, lors de la préparation ou à la suite de celle-ci,
b) avec au moins 2% en poids d'un ou de plusieurs diluants réactifs radiodurcissables,
où la composition des composants a) et b) ainsi que leur rapport quantitatif sont choisis l'un par rapport à l'autre de sorte qu'il en résulte une température de transition vitreuse du liant pour laque en poudre d'au moins 35°C.

7. Laque en poudre contenant :
i) au moins un liant pour laque en poudre suivant l'une des revendications 1 à 5,
ii) le cas échéant, d'autres liants insaturés différents de i), avec des groupements réagissant par polymérisation avec des composés éthyléniquement insaturés sous l'action d'un rayonnement actinique (groupements radiodurcissables),
iii) le cas échéant, des auxiliaires et additifs usuels en chimie des laques, comme des pigments, des produits nivelants, des agents de désaération, des additifs agissant de manière tribologique et/ou des agents thixotropes, et
iv) au moins un agent formant radicaux, activable de manière thermique ou photochimique.

8. Utilisation du liant pour laque en poudre suivant l'une des revendications 1 à 5 et/ou de la laque en poudre suivant la revendication 7, pour le revêtement de substrats tels que le bois, le métal, les matières plastiques, des substances minérales et/ou des substrats déjà revêtus ou des substrats, qui consistent en des combinaisons quelconques des matériaux cités.

9. Revêtements pouvant être obtenus à partir du liant pour laque en poudre suivant l'une des revendications 1 à 5 et/ou de la laque en poudre suivant la revendication 7.

10. Substrat revêtu avec les revêtements suivant la revendication 9.
